# EUROPEAN PATENT APPLICATION

(11) **EP 2 088 710 A1**
(43) Date of publication of application: **12.08.2009**
(21) Application number: 07801077.4
(22) Date of filing: 11.09.2007
(51) Int. Cl.: H04L 12/14

(54) **METHOD FOR CALL CHARGING AND CHARGING SYSTEM AND DEVICE**

(30) Priority: 29.09.2006 CN 200610122520
(71) Applicant: Huawei Technologies Co., Ltd., Longgang District, Shenzhen, Guangdong 518129 (CN)
(72) Inventor: ZHENG, Xiaofeng, Shenzhen, Guangdong 518129 (CN); LIU, Ping, Shenzhen, Guangdong 518129 (CN)
(74) Representative: Thun, Clemens
(86) International application number: PCT/CN2007/070669
(87) International publication number: WO 2008/040216

(57) **Abstract**

A call charging method disclosed in the present invention includes: determining the pulse charging mode of the call and generating a SIP control signal that carries the pulse charging mode according to the SIP session request signal including the call attribute information sent from the analog calling user side; and performing pulse charging for the call according to the SIP control signal. In addition, the present invention also discloses a charging system and a charging apparatus based on SIP. On the basis of the analog user call service in a SIP-based communication system, the present invention enables pulse charging for call services of analog users, and increases and perfects the charging functions of the SIP-based communication system.

## Description

This application claims a priority from the Chinese Patent Application No. 200610122520.5, filed with the Chinese Patent Office on September 29, 2006 and entitled "Method and System for Call Charging", the contents of which are incorporated herein by reference in their entirety.

### FIELD OF THE INVENTION

The present invention relates to the communication field, and in particular, to a method, a system, and an apparatus for call charging.

### BACKGROUND

The Session Initiation Protocol (SIP) is an important protocol in the Next Generation Network (NGN) technology, and attracts more and more attention of the communication industry. The SIP is developed to realize signaling control in the Internet Protocol (IP) network, achieve communication with a softswitch, and provide cross-Internet advanced telephone services. The IP telephone is evolving to an official commercial telephone mode, and SIP is an important one of the NGN protocol series that ensure fulfillment of such evolution. As part of the Internet Engineering Task Force (IETF) standard process, the SIP is set up on the basis of protocols such as Simple Mail Transfer Protocol (SMTP) and Hypertext Transfer Protocol (HTTP). The SIP is used to set up, change, and terminate an IP network-based call between users. In order to provide telephone services, the SIP supports the telephone services strongly with reference to different standards and protocols, for example, the Real Time Transport Protocol (RTP) which ensures transmission, the Resource Reservation Protocol (RSVP) which ensures voice quality, the Lightweight Direction Access Protocol (LDAP) which can provide directories, and Remote Authentication Dial In User Service (RADIUS) which can authenticate users.

A SIP network contains two logic elements: SIP user agent and SIP network server. A SIP user agent is a terminal system element of a call. The SIP user agent includes a client element for initiating a call and a server element for answering a call. A SIP server is a network device for handling signaling correlated to multiple calls, and is used to provide name resolution and user orientation, namely, to determine, according to the obtained address in the form of an email or the telephone number correlated to the called party, the specific server for solving address information. Currently, a SIP server comes in three forms: SIP state agent server, SIP stateless agent server, and SIP redirection server. A SIP agent server receives requests, and decides the destination of such requests and sends them to the next server in accordance with the next-hop route principle. A state agent server memorizes the received incoming requests, returned responses and forwarded requests, so as to generate requests, attempt concurrently multiple possible user positions, and return the best response. The state agent server may be a local device that is closest to the user agent. It is used to control the user domain and serves as the main platform of the application server. Once transferring a request, a stateless agent server forgets all information in order to transfer the request quickly. The stateless agent server is a backbone in the SIP structure. A redirection server receives requests. The redirection server does not transfer the requests to the next server, but sends a response to the calling party, indicating the address of the called party.

With the logic elements and functional mechanisms provided by the SIP protocol, the communication system that bears the SIP protocol can provide the following services: user positioning, user capability, user availability, call setup, call processing, call forwarding, call number transferring, personal mobility, terminal type negotiation and selection, terminal capability negotiation, authentication of calling party and called party, call forwarding of the unknown or directive mode, and multicast conference invitation.

Being simple, scalable and operable, the SIP protocol is more and more appealing to the communication industry and becomes an important protocol in the NGN and 3G multimedia subsystem domain. In addition, more and more SIP-enabled client software and intelligent multimedia terminals, and SIP-based servers and softswitch equipment are emerging on the market. However, the communication technology is experiencing a transition now. During the transition, analog user equipment (UE) such as a coin telephone set, a magnetic telephone set, and an IC card telephone set are still in use in a certain period. It is inevitable that the SIP-based packet-switched network communication systems constructed by the operators currently have to support access from analog terminals. Therefore, the packet-switched network communication system has to support traditional Public Switched Telephone Network (PSTN) services.

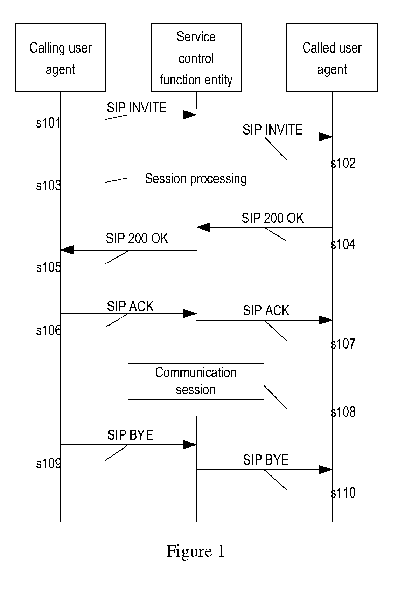

Figure 1 describes the SIP-based communication system in the prior art and the process for implementing the previous analog UE call connection and the call termination service. This communication system includes a calling SIP user agent, a SIP call server, a called SIP user agent, and a transmission network. The service control function entity shown in Figure 1 includes a SIP call server. The specific procedure is as follows:

In Step s101, according to the call request of the analog calling party, the calling SIP user agent sends a SIP INVITE message to the call server through the transmission network at the calling side, requesting to set up a call connection.

In Step s102, after receiving the SIP INVITE message, the call server controls the transmission network to set up a call connection according to the route-related information in the SIP INVITE message, and delivers the SIP INVITE message to the called SIP user agent through the transmission network at the called side.

In Step s103, the call server controls the whole communication system to perform session processing.

In Step s104, after detecting the response from the called party, the called SIP user agent sends a SIP 200 OK message to the call server through the transmission network at the called side, instructing the called party to answer;

In Step s105, after receiving the SIP 200 OK message, the call server delivers the SIP 200 OK message to the calling SIP user agent through the transmission network at the calling side, and sets up the call connection;

In Step s106, through the transmission network at the calling side, the calling SIP user agent sends a SIP ACK message to the call server through the transmission network at the calling side, acknowledging that the calling SIP agent receives the SIP INVITE message;

In Step s107, after receiving the SIP ACK message, the call server transfers the SIP ACK message to the called SIP user agent through the transmission network at the called side;

In Step s108, the call server controls the whole system to perform communication session of the call connection;

In Step s109, through the transmission network at the calling side, the calling SIP user agent sends a SIP BYE message to the call server, indicating that the calling party goes on-hook;

In Step s110, after receiving the SIP BYE message, the call server transfers the SIP BYE message to the called SIP user agent through the transmission network at the called side, and terminates the call connection.

To sum up, the SIP-based communication system in the prior art has the following defects although it implements the previous analog user call service: When the user access device accesses a softswitch through SIP, it is impossible to perform pulse charging for the analog user call service in the SIP-based communication system because the SIP protocol defines no pulse charging for analog user call services currently. Therefore, the operator is unable to charge for such a call service.

### SUMMARY

The technical issue to be addressed by the present invention is to provide a method, a system, and an apparatus for call charging. On the basis of the analog user call service in a SIP-based communication system, the present invention realizes pulse charging for call services of analog users.

In order to address the previous technical issue, technical solutions according to an embodiment of the invention provide the following.

A method for call charging, including:
determining a pulse charging mode of a call according to a SIP request signal comprising call attribute information sent from an analog user side; and
generating a SIP control signal that carries the pulse charging mode through which pulse charging for the call is performed.

A charging system, including:
a charging control apparatus, adapted to determine the pulse charging mode of the call, and generate a SIP control signal that carries the pulse charging mode, according to the SIP request signal including the call attribute information sent from the analog user side; and
a charging execution apparatus, adapted to perform pulse charging for the call according to the SIP control signal.

A charging control apparatus, including:
a configuration database unit of pulse charging modes, adapted to store the pulse charging modes through which pulse charging is performed for a call;
a querying unit of pulse charging modes, adapted to query the configuration database unit of pulse charging modes according to the call attribute information in the SIP request signal, and obtain a query result that carries the pulse charging mode of the call; and
a charging control signal unit, adapted to generate a SIP control signal according to the pulse charging mode in the query result.

A charging execution apparatus, including:
a resolving unit, adapted to resolve the pulse charging mode of the call in the SIP control signal, and obtain the applicable pulse charging mode;
a pulse delivery unit, adapted to deliver the charging pulse according to the pulse charging mode; and
a charge statistics unit, adapted to perform pulse charging for the call according to the charging pulse.

The embodiments of the present invention have the following benefits: On the basis of the analog user call service in a SIP-based communication system, the present invention realizes pulse charging for call services of analog users, and increases and perfects the charging functions of the SIP-based communication system.

### BRIEF DESCRIPTION OF THE DRAWINGS

Figure 1 is a flowchart of the call service of an analog user in a SIP-based communication system in the prior art.

Figure 2 is a brief flowchart of a call charging method according to an embodiment of the invention.

Figure 3 is a flowchart of call charging in a SIP-based communication system according to an embodiment of the invention.

Figure 4 shows a charging system according to an embodiment of the invention.

Figure 5 shows the structure of a charging control apparatus according to an embodiment of the invention.

Figure 6 shows the structure of a charging execution apparatus according to an embodiment of the invention.

### DETAILED DESCRIPTION

On the basis of a SIP-based communication system in which analog user call services are performed, the embodiments of the present invention add the function of charging for analog user calls; determine pulse charging mode according to a SIP session request signal uploaded from an analog calling user side; obtain pulse charging mode according to the resolved pulse charging mode; and perform charging by delivering charging pulses on the subscriber line that bears the call, thus effectively solving the defect in the prior art, namely, inability of performing pulse charging for analog user call services for lack of defining the analog user call charging in the SIP.

It should be understood that the embodiments of the present invention make use of the SIP signal in the analog user call process in the SIP-based communication system, and add the pulse charging function to the call connection process. The present invention is described in detail below with reference to embodiments and accompanying drawings.

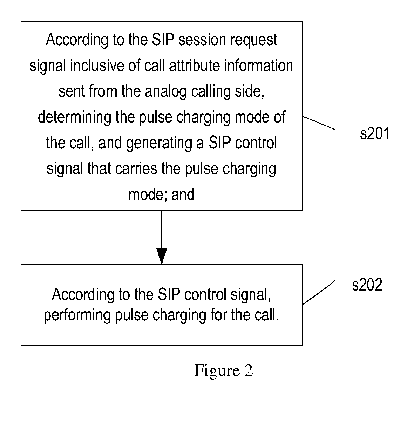

Figure 2 is a brief flowchart of a call charging method according to an embodiment of the invention. The procedure includes:
Step s201: determining a pulse charging mode of a call, and generating a SIP control signal that carries the pulse charging mode, according to a SIP session request signal including call attribute information sent from an analog calling side; and
Step s202: performing pulse charging for the call, according to the SIP control signal generated in step s201.

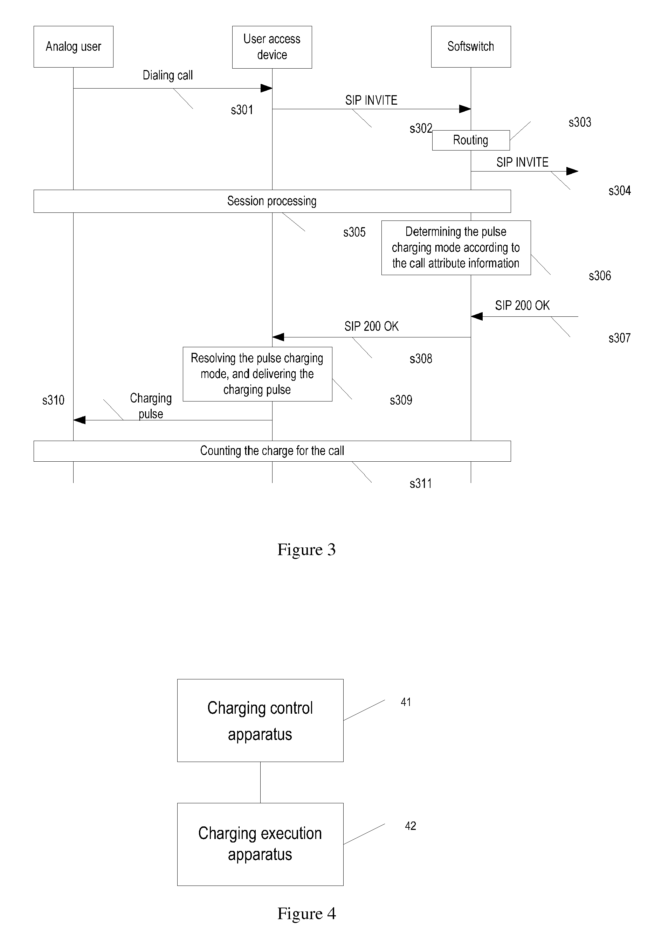

Refer to Figure 3 on the basis of the call charging procedure described briefly above. Figure 3 is a flowchart of call charging in a SIP-based communication system. The communication system includes an analog user, a user access device, and a softswitch. The procedure includes the following steps:
Step s301: The analog user dials a number successfully, and originates a dialing call to the user access device.
Step s302: The user access device receives the dialing call, and sends the SIP INVITE signal that carries call attribute information to the softswitch, in which the call attribute information may be a calling or called number;
Step s303: The softswitch sets up a call connection route between the calling party and the called party, according to the call attribute information in the received SIP INVITE signal;
Step s304: The softswitch sends the SIP INVITE signal to the remote called party through the call connection route;
Step s305: The softswitch controls the whole system to perform session processing;
Step s306: According to the call attribute information, the softswitch determines a pulse charging mode used for charging for the call. The pulse charging mode may be implemented according to pulse delivery interval information, pulse quantity information in a pulse delivery interval, pulse delivery frequency information, tariff represented by each pulse, or combination thereof. The determining process may be implemented by retrieving the previous specific pulse charging mode from a configuration database of pulse charging modes in the application server;
Step s304 may be processed after step s305 and step s306.
Step s307: The softswitch obtains SIP 200 OK signal from the remote called user side, and acknowledges the called user's answer;
Step s308: The softswitch transfers the SIP 200 OK signal including the pulse charging mode to the user access device of the analog calling user side;
Step s309: The user access device resolves the pulse charging mode in the received SIP 200 OK signal, and obtains an applicable pulse charging mode.
Step s310: According to the obtained pulse charging mode, the user access device performs charging for the call by delivering a charging pulse on the subscriber line that bears the call. The pulse delivery interval, pulse quantity in a pulse delivery interval, pulse delivery frequency, and tariff represented by each pulse can be decided by the tariff of the call. The analog user equipment (UE) that provides the public telephone service can identify the charging information by detecting pulses, so as to accomplish real-time charging. The charging pulse is physically a 16/12kHZ, at least 50ms wide pulse signal or polarity-reversing pulse signal; and
Step s311: The softswitch controls the whole system to perform subsequent session processing and makes statistics of the charges for the call.

The previous SIP 200 OK signal may carry a pulse charging mode by modifying the SIP header field and/or the SIP message parameter. A new message media type can be defined in this SIP message to cover the pulse charging mode information. Referring to the definition in the Amet event packet of the H.248 protocol, the pulse charging mode includes the following types:
Enable Meter (EM) type, which includes two parameters: EM-pulse-count, indicating the quantity of pulses delivered per interval; and EM-pulse-repetition-interval, indicating the event interval;
Meter Pulse Burst (MPB) type, which includes two parameters: MPB-burst-pulse-count, indicating the quantity of pulses delivered at a time; and MPB-pulse-repetition-interval, indicating the event interval between pulses;
Phased Meter (PM) type, which includes these parameters: PM-pulse-repetition-interval, PM-Maximum pulse count per charge interval (PM-MAX PCCI), PM-repetition of Max PCCI (PM-REPX), PM-Minimum pulse per charge interval (PM-MIN PCCI), PM-repetition of Min PCCI (PM-PCN), PM-charge interval (PM-CI), and PM-phase duration (PM-PD).

For example, in the case of the EM type, the information on the quantity of pulses within a pulse interval can be obtained through the EM-pulse-count parameter; and the information on the pulse interval can be obtained through the EM-pulse-repetition-interval parameter. Therefore, the charging can be performed through the previous two types of information. As for how to implement the charging process based on which parameters, solutions has been provided in the prior art.

It should be understood that the interaction between the softswitch and the user access device may be defined through other agreed pulse charging mode as required by the operator, without being limited to the previous.

A charging system in an embodiment of the present invention is hereinafter described with reference to Figure 4. The charging system includes:
a charging control apparatus 41, adapted to determine a pulse charging mode of a call, and generate a SIP control signal that carries the pulse charging mode, according to a SIP session request signal including call attribute information sent from an analog user side; and
a charging execution apparatus 42, adapted to perform pulse charging for the call according to the SIP control signal.

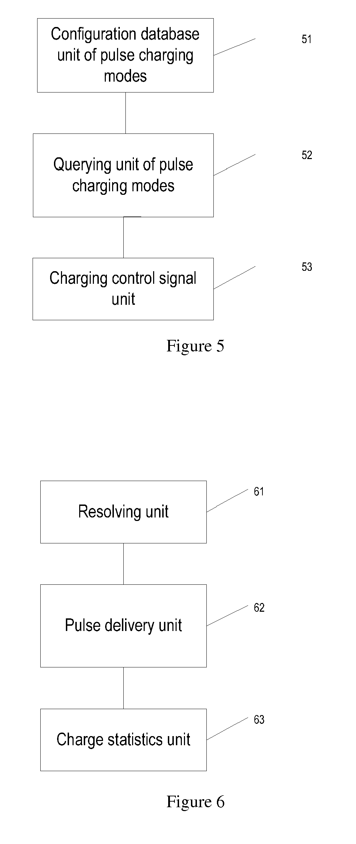

More particularly, Figure 5 shows the structure of a charging control apparatus in an embodiment of the invention. The charging control apparatus includes:
a configuration database unit of pulse charging modes 51, adapted to storing pulse charging modes through which pulse charging is performed for a call;
a querying unit of pulse charging modes 52, adapted to querying the configuration database unit of pulse charging modes 51 according to call attribute information in a SIP session request signal, and obtain a query result that carries the pulse charging mode of the call; and
a charging control signal unit 53, adapted to generating a SIP control signal according to the pulse charging mode in the query result.

More particularly, Figure 6 shows the structure of a charging execution apparatus according to an embodiment of the invention. The charging execution apparatus includes:
a resolving unit 61, adapted to resolve pulse charging mode of a call in a SIP control signal, and obtain a applicable pulse charging mode;
a pulse delivery unit 62, adapted to deliver charging pulse on subscriber line that bears the call according to the obtained pulse charging mode; and
a charge statistics unit 63, adapted to perform charging for the call according to the charging pulse.

When the charging control apparatus is a softswitch, the charging execution apparatus may be an integrated access device in the user access device. In order to implement pulse charging for the call services of analog users, the previous integrated access device may be coupled to the analog UE through a Z interface, and may be coupled to the softswitch through a SIP interface. The functions of the devices and the interrelations between them are described below.

The integrated access device is a physical entity for an analog UE to access the Next Generation Network (NGN). It supports subscriber line signaling and the SIP protocol, and is used to handle conversion between circuit-switched voice and NGN voice between an analog UE and an NGN domain. When receiving a dialing call from an analog user, the integrated access device generates a SIP INVITE signal that carries the call user attribute information, and sends the SIP INVITE signal to the softswitch.

The softswitch provides the user who accesses an NGN with these functions: call control, routing, resource allocation, protocol processing, and authentication. After receiving a SIP INVITE signal from the integrated access device at the analog calling user side, the softswitch sets up a call route between the calling party and the called party according to the calling number and the called number in the received SIP INVITE signal, and sends the SIP INVITE signal to the remote called user. Meanwhile, according to the call attribute information, the softswitch determines the pulse charging mode for the call. After receiving a SIP 200 OK call response signal from remote called user side, the softswitch sends the SIP 200 OK signal including the pulse charging mode to the integrated access device at the analog calling user side, and controls the integrated access device to deliver a charging pulse to the subscriber line for performing statistics charging.

When the charging control apparatus is a charging server, the charging execution apparatus may be an access gateway in the user access device. In order to implement pulse charging for the call services of analog users, the previous access gateway may be coupled to the analog UE through a Z interface, and may be coupled to the server through a SIP interface. The functions of the devices and the interrelations between them are described below.

The access gateway is a physical entity for an analog UE to access the Next Generation Network (NGN). It supports subscriber line signaling and the SIP protocol, and is used to handle conversion between circuit-switched voice and NGN voice between an analog UE and an NGN domain. When receiving a dialing call from an analog user, the integrated access device generates a SIP INVITE signal that carries the call user attribute information, and sends the SIP INVITE signal to the charging server.

The charging server provides the charging function for the user who accesses an NGN. After receiving a SIP INVITE signal from the access gateway at analog calling user side, the charging server determines the pulse charging mode for the call according to the call attribute information in received SIP INVITE signal. After receiving a SIP 200 OK call response signal from remote called user side, the charging server sends the SIP 200 OK signal including the pulse charging mode to the access gateway at the analog calling user side, and controls the access gateway to deliver a charging pulse to the subscriber line for performing statistics charging.

The previous SIP 200 OK signal may carry a pulse charging mode by modifying the SIP header field and/or the SIP message parameter. A new message media type can be defined in this SIP message to cover the pulse charging mode information. For the pulse charging mode, see the types defined in the Amet event packet of the H.248 protocol mentioned above.

The pulse charging mode is implemented according to the information about: the pulse delivery interval, pulse quantity in a pulse delivery interval, pulse delivery frequency, and tariff represented by each pulse, or combination thereof. Such information can be decided by the tariff of the call. More particularly, as regards the pulse delivery interval, the whole pulse delivery charging time can be divided into several intervals according to the local data configuration, thus enabling different charging policies for different charging intervals. The analog UE that provides the public telephone service can identify charging information through pulse detection to accomplish real-time charging. The charging pulse is physically a 16/12kHZ pulse signal, at least 50 ms wide or polarity-reversing pulse signal.

It should be appreciated that the previous is only preferred embodiments of the invention and is not for use in limiting the invention. Any modification, equivalent substitution, and improvement without departing from the spirit and principle of this invention should be covered in the protection scope of the invention.

## Claims

1. A method for call charging, comprising:
determining a pulse charging mode of a call according to a SIP request signal comprising call attribute information sent from an analog user side; and
generating a SIP control signal that carries the pulse charging mode through which pulse charging for the call is performed.

2. The method for call charging of claim 1, **characterized in that** the determining the pulse charging mode of the call comprises:
querying a configuration database of pulse charging modes according to the call attribute information in the SIP request signal, and obtaining a query result that carries the pulse charging mode of the call; and
generating the pulse charging mode of the call according to the query result.

3. The method for call charging of claim 1, **characterized by** further comprising:
resolving pulse charging mode of the call in the SIP control signal, and obtaining the pulse charging mode;
delivering charging pulse according to the obtained pulse charging mode; and
performing charging for the call according to the charging pulse.

4. The method for call charging of claim 1, **characterized in that** the SIP control signal carries the SIP message of the pulse charging mode through the SIP header field and/or SIP message parameter.

5. The method for call charging of any one of claims 1-4, **characterized in that** the pulse charging mode comprises at least the information about:
pulse delivery interval, pulse quantity in a pulse delivery interval, pulse delivery frequency, tariff represented by each pulse, or combination thereof.

6. A charging system, comprising:
a charging control apparatus, adapted to determine a pulse charging mode of a call according to a SIP request signal including call attribute information sent from an analog user side, and generate a SIP control signal that carries the pulse charging mode; and
a charging execution apparatus, adapted to perform pulse charging for the call according to the SIP control signal.

7. The charging system of claim 6, **characterized in that** the charging control apparatus comprises:
a configuration database unit of pulse charging modes, adapted to store the pulse charging modes through which pulse charging is performed for a call;
a querying unit of pulse charging modes, adapted to query the configuration database unit of pulse charging modes according to the call attribute information in the SIP request signal, and obtain a query result that carries the pulse charging mode of the call; and
a charging control signal unit, adapted to generate a SIP control signal according to the pulse charging mode in the query result.

8. The system of claim 6, **characterized in that** the charging execution apparatus comprises:
a resolving unit, adapted to resolve the pulse charging mode of the call in the SIP control signal, and obtain the applicable pulse charging mode; and
a pulse delivery unit, adapted to deliver the charging pulse according to the pulse charging mode; and
a charge statistics unit, adapted to perform pulse charging for the call according to the charging pulse.

9. The charging system of claim 6, **characterized in that** the SIP control signal carries the SIP message of the pulse charging mode through the SIP header field and/or SIP message parameter.

10. The charging system of any one of claims 6-9, **characterized in that** the pulse charging mode comprises at least the information about:
pulse delivery interval, pulse quantity in a pulse delivery interval, pulse delivery frequency, tariff represented by each pulse, or combination thereof.

11. The charging system of any one of claims 6-9, **characterized in that** the charging execution apparatus is a user access device.

12. The charging system of claim 11, **characterized in that** the user access device is an integrated access device or an access gateway.

13. The charging system of any one of claims 6-9, **characterized in that** the charging control apparatus is a softswitch or a charging server.

14. A charging control apparatus, comprising:
a configuration database unit of pulse charging modes, adapted to store a pulse charging mode through which pulse charging is performed for a call;
a querying unit of pulse charging modes, adapted to query the configuration database unit of pulse charging modes according to call attribute information in a SIP request signal, and obtain a query result that carries the pulse charging mode of the call; and
a charging control signal unit, adapted to generate a SIP control signal according to the pulse charging mode in the query result.

15. The charging control apparatus of claim 14, **characterized in that** the pulse charging mode comprises at least the information about:
pulse delivery interval, pulse quantity in a pulse delivery interval, pulse delivery frequency, tariff represented by each pulse, or combination thereof.

16. The charging control apparatus of claim 14, **characterized in that** the charging control apparatus is a softswitch or a charging server.

17. A charging execution apparatus, comprising:
a resolving unit, adapted to resolve a pulse charging mode of a call in a SIP control signal, and obtain a pulse charging mode;
a pulse delivery unit, adapted to deliver a charging pulse according to the pulse charging mode; and
a charge statistics unit, adapted to perform pulse charging for the call according to the charging pulse.

18. The charging execution apparatus of claim 17, **characterized in that:**
the charging execution apparatus is a user access device; and
the user access device is an integrated access device or an access gateway.
